# EUROPEAN PATENT SPECIFICATION

(11) **EP 2 331 348 B1**
(45) Date of publication and mention of the grant of the patent: **16.10.2013**
(21) Application number: 09810906.9
(22) Date of filing: 31.08.2009
(51) Int. Cl.: B60B 5/02, B60B 21/00, B29B 11/06, B32B 1/08, B29C 70/08, B29C 70/36, B60B 3/06, B29C 70/44, B29L 31/32

(54) **METHOD OF MOLDING A FIBRE-REINFORCED COMPOSITE WHEEL**
VERFAHREN ZUR FORMUNG EINES RADES AUS FASERVERSTÄRKTEM VERBUNDSTOFF
PROCÉDÉ DE MOULAGE D'UNE ROUE COMPOSITE RENFORCÉE DE FIBRES

(30) Priority: 03.09.2008 US 136403 P
(43) Date of publication of application: 15.06.2011
(73) Proprietor: Carbon Revolution Pty Ltd., Melbourne, VIC 3000 (AU)
(72) Inventor: DINGLE, Matthew, Torquay Victoria 3228 (AU); GASS, Donald, Brett, Forest Lake, 55025 Minnesota (US); DENMEAD, Ashley, Moolap Victoria 3221 (AU); DELLIOS, David, Darley Victoria 3340 (AU)
(74) Representative: Manitz, Finsterwald & Partner GbR
(86) International application number: PCT/AU2009/001120
(87) International publication number: WO 2010/025495

(56) References cited:
- EP-A1- 0 842 757
- WO-A1-93/01930
- WO-A1-93/01930
- GB-A- 2 360 483
- JP-A- 7 137 148
- JP-A- 7 137 148
- US-A- 4 294 639
- US-A- 4 532 097
- US-A- 5 277 479
- US-A1- 2003 025 232
- US-A1- 2003 025 232

## Description

### Field of the Invention

The present invention generally relates to a method of molding a fibre-reinforced composite wheel. While the invention is particularly applicable for forming motor vehicle wheels, it is to be appreciated that the invention is not limited to that application. EP0842757A1 discloses the features of the preamble of the independent claim. Related technologies are also known from US2003/025232A1 and GB2360483A.

### Background of the Invention

The following discussion of the background to the invention is intended to facilitate an understanding of the invention. However, it should be appreciated that the discussion is not an acknowledgement or admission that any of the material referred to was published, known or part of the common general knowledge as at the priority date of the application.

Fibre-reinforced molded resin motor vehicle wheels are molded as one piece having a rim and a disc portion. The rim may include two axially spaced apart rims or flanges between which a vehicle tyre can be mounted. The disc portion of the wheel includes a mounting hub and a hub to rib interface section. The disc portion can have a variety of configurations which can be selected by a customer to provide a custom finish to the wheels of their vehicle.

These types of fibre-reinforced molded resin wheels are traditionally formed by compression molding separate mold charges of a composite fibre-resin sheet known as a pre-impregnated or "prepreg" sheet corresponding with the wheel rim and disc portion of the wheel. The mold charge for each section generally comprises pre-cut sections of a prepreg sheet with reinforcing fibres arranged throughout the sheet. Examples of this process are disclosed in United States Patents Nos. 4,294,639 and 4,636,344.

That traditional method relies on the supply of prepreg sheets. However, prepreg sheets have a number of disadvantages including the need to be shipped and stored at low (near freezing) temperatures, limited shelf life after formation, high cost, difficulty to conform to complex shapes and a requirement to be molded and cured under high pressures, such as using an autoclave.

It would therefore be desirable to provide an alternative method of molding a fibre-reinforced composite wheel which addresses at least one of the above disadvantages.

### Summary of the Invention

According to the present invention, there is provided a method of molding a fibre-reinforced composite wheel using a mold assembly including an annular rim mold portion for defining an outer surface of a rim of the wheel and a disc mold portion for defining a front surface of a disc portion of the wheel, the method comprising the steps of:
locating at a first part of reinforcement fabric within the mold assembly around the rim mold portion;
locating at a second part of reinforcement fabric within the mold assembly over the disc mold portion;
sealing the mold assembly with a flexible mold element to form a substantially fluid tight mold cavity, the flexible mold element including a flexible polymer component for defining an inner surface of the rim of the wheel and a rear surface of the disc portion of the wheel;
introducing a resin into the mold cavity by withdrawing air from the mold cavity through an inlet at a convenient location on the mold assembly; and
curing the resin to form an integral fibre-reinforced composite wheel.

A vehicle wheel is therefore formed according to the present invention using a mold cavity defined by a flexible polymer element in contrast to a traditional rigid mold element, for example a metal mold element. This type of mold more easily molds undercut areas and cavities that conventional rigid molds cannot physically be inserted or released from. Furthermore, this type of mold reduces the cost of tooling because a flexible polymer mold is cheaper to manufacture and allows for the other tooling components to be manufactured to a lower tolerance. In comparison, matched solid molds must be machined to a high tolerance to obtain correct fitment with the adjoining mold components.

The flexible polymer from which the flexible mold element is formed can comprise any suitable flexible polymer material including rubbers, latex materials or the like that are compatible with the resin. Most preferably, the flexible mold element is formed from a silicone polymer.

The flexible mould element may comprise a body flexible material such as silicone polymer or may only partly comprise body flexible material. Where the flexible mould element is partly flexibly, the flexible mold element may include a substantially solid section and a flexible section. Flexible areas could then be specifically designed into areas of the flexible mold element. Again, the flexible section may be formed from a flexible polymer including rubbers, latex materials or the like that are compatible with the resin. Preferably, the flexible mold element is formed from a silicone polymer.

The flexible mold element maybe formed by:
placing a mold dummy of the vehicle wheel within the mold assembly;
coating those sections of the mold dummy which are not adjacent the rim mold portion or disc mold portion with a curable polymer material; and
curing the curable polymer material to form a flexible polymer component having a complementary shape and configuration to the abutting sections of the mold dummy.

Where the flexible mold element includes a substantially solid section and a flexible section, the solid sections can be located on the mold dummy in the appropriate locations prior to coating the sections of the mold dummy with a curable polymer material.

The mold dummy can be a prototype vehicle wheel, machined mold master, preformed component or the like.

A reinforcement component can be included within the flexible mold element to enhance the material properties of the flexible mold element. In one embodiment, a reinforcing fabric is included in the flexible mold element. One suitable reinforcing fabric is a flexible woven nylon fabric. The inclusion of a reinforcing fabric preferably entails the inclusion of the following steps between the coating step and curing step when forming the flexible mold element:
locating at least one section of reinforcing fabric over at least a portion of the initial coating of flexible polymer material; and
coating those sections of the mold dummy which are not adjacent the rim mold portion or disc mold portion with a further flexible polymer material.

The initial and further coating, as with the coating to form an unreinforced mold cover, can be applied by application of one or more layers of the polymer material.

The flexible mold element can be affixed to the rim mold portion and/or disc mold portion by a variety of attachment arrangements or techniques. However, the flexible mold element preferably includes at least one releasable fastening formation which cooperates with a complementary fastening structure in the rim mold portion for releasably fastening the flexible mold element to the rim mold portions. Preferably, the flexible mold element includes at least one substantially annular rib which produces an interference fit with a complementary annular groove of the rim mold portion.

Each of the rim mold portion, disc mold portion and flexible mold element can be assembled from any number of component parts. In some embodiments, the rim mold portion comprises at least two connectable sections. Preferably, the disc mold portion comprises a single section and the flexible mold element comprises a single section.

The withdrawal of air from the mold cavity is preferably by the use of a vacuum infusion system including a vacuum pump. In use, the pump reduces pressure within the mold cavity by evacuating air through a fluid outlet from the mold cavity at a convenient location on the mold assembly. The reduced pressure draws resin through the inlet into the mold cavity. The vacuum infusion system can draw the resin into the mold cavity so as to progressively fill the mold cavity. As this filling progresses, the resin progressively saturates and incorporates the reinforcing fabric into each portion of the mold assembly. In achieving this, the resin displaces any air entrapped in the reinforcement, enabling this air to be removed by the action of the vacuum pump in withdrawing air from the mold cavity. The resin is drawn into the mold cavity until the cavity is full and, to facilitate this, the mold assembly may have a riser pipe extending from the mold cavity to the fluid outlet through which the vacuum pump withdraws air.

Pressure may be applied to an external surface of the mold cavity. Preferably, the pressure chamber is formed over the flexible mold element. To enable this, the mold assembly can have a pressure plate over the rear of the rim mold portion to form a substantially fluid tight pressure chamber between the pressure plate and flexible mold element. Pressure within the pressure chamber preferably is maintained during the curing step, and assists in retaining the form of the flexible mold element.

Preferably, a pressure of between 10 to 100 psi is established within the pressure chamber. More preferably, a pressure of 45 psi is established within the pressure chamber.

It is preferable to preheat the mold assembly portions and the resin to prevent the resin from being quenched by a cold mold. A temperature of between 20°C to 60°C is usually appropriate such as from 30°C to 50°C, and preferably 30 to 35 °C.

The mold assembly may have an associated heating system. At least one portion of the mold assembly can be heated by the heating system. The heating system may include a system of heating elements attached to, such as by bonding, or embedded in at least one portion. Thus, electrical heating elements can be bonded or embedded onto or into the at least one portion of the mold assembly. Alternatively, the heating system may include a heating jacket on or in thermal communication with at least one portion of the mold assembly. The heating jacket may be a heat transfer jacket through which heated fluid is passed. Preferably, the temperature of the heating system is controlled by a thermostatic control system.

The wheel produced by the invention is retained in the mold assembly at least until the resin has cured to a stage enabling the wheel to be removed from the mold assembly and handled safely. Curing of the resin can then proceed to completion and may be accelerated by heating the wheel to a higher temperature. In a first stage, curing is conducted at an average temperature of between 40°C and 60°C. In a second stage, such as after removal of the wheel from the mold assembly, curing may be conducted at an average temperature of between 90°C and 150°C.

A reinforcement fabric is included within the vehicle wheel to enhance the mechanical and physical properties of the cured resin component. The reinforcement fabric can be formed from any suitable fibre including (but not limited to) carbon fibre, braided graphite fibres, carbon nano tubes (CNT), Kevlar, fibreglass, natural fibres or the like, or combinations of these fibres. For example, CNT would normally be included with other fibre reinforcement such as carbon fibre or Kevlar. Any number of layers of reinforcement fabric can be used. Preferably, each layer is formed as a laminate of the layers, each layer being affixed to an adjoining layer using an adhesive.

The reinforcement fabric can be woven or unwoven. Where at least two layers of fabric are used, it is preferable for the outer layers of the first part to be formed from a woven fabric. Furthermore, it is preferable for the first part and second part of the reinforcement fabric to have a fibre orientation configured to the particular reinforcement requirements of that portion of the vehicle wheel in which the reinforcement fabric is located.

Identification features can be imbedded in the resin of the wheel while molding the wheel. These features can include brand logo's, serial numbers, RFID chips, holograms or any other uniquely identifiable security feature to aid in the identifying the product. These features may be identified by both visible and non visible spectrum of light and radio waves or other modes of detection. These features may be on any surface of the wheel such as an internal or an external surface or may be located between the reinforcing fabric layers of the wheel.

The cured vehicle wheel can be further processed to include further features to the wheel and/or finish the exterior surfaces of the wheel. Thus, the method of the present invention can further include drilling the cured vehicle wheel to include stud holes and an air filler hole, and machining of the hub face. Also, the front face of the disc portion may be buffed and/or polished.

### Brief Description of the Drawings

The present invention will now be described with reference to the figures of the accompanying drawings, which illustrate particular preferred embodiments of the present invention, wherein:
Figure 1 is a schematic front view of one form of a fibre reinforced composite motor vehicle wheel manufactured using a method according to one embodiment of the present invention.
Figure 2 is a side view of the motor vehicle wheel shown in Figure 1.
Figure 3 is a schematic sectional top view of a mold assembly used for a method of manufacturing a motor vehicle wheel according to one embodiment of the present invention.
Figure 4 is a more detailed sectional top view of the mold assembly shown in Figure 3.
Figure 5 is aside view of the mold assembly shown in Figure 3.
Figure 6 is a generalised sectional top view of the mold assembly shown in Figure 3 with a pressure plate fastened thereon.
Figure 7 is a schematic diagram illustrating a first arrangement for introducing resin into a mold cavity in the mold assembly.
Figure 8 is yet another schematic diagram a second arrangement for introducing resin into a mold cavity in the mold assembly.
Figure 9 provides a plot of one temperature regime used to cure a vehicle wheel formed using a method according to one embodiment of the present invention which does not include gel coat material.
Figure 10 provides a plot of one temperature regime used to cure a vehicle wheel formed using a method according to one embodiment of the present invention which includes gel coat material.

### Detailed Description

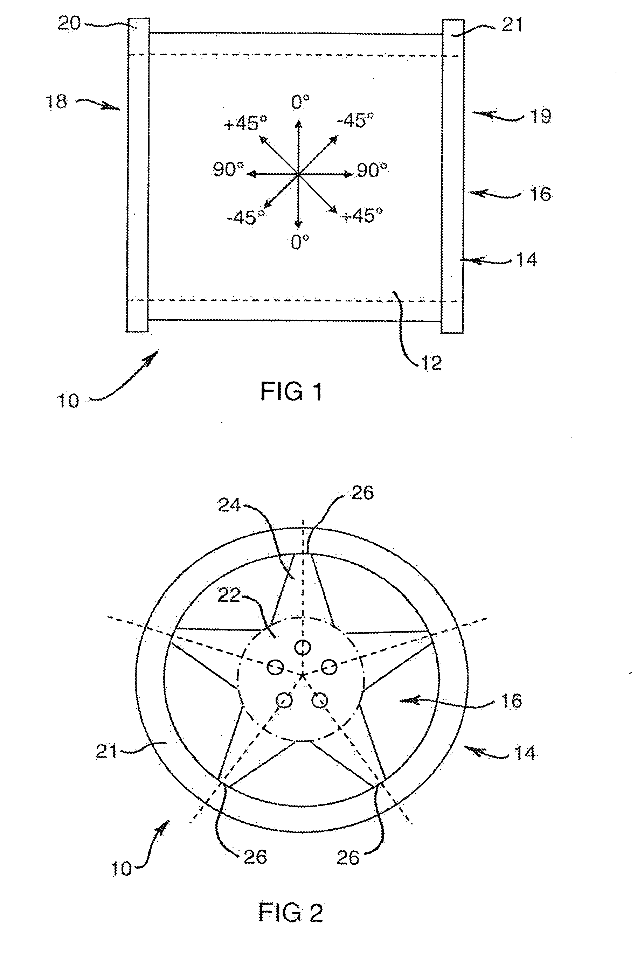

Referring firstly to Figures 1 and 2, there is shown a one piece fibre reinforced composite motor vehicle wheel 10 manufactured using a method according to one embodiment of the present invention. The illustrated wheel 10 includes an annular rim 12 and a disc portion 14. The rim 12 includes annular flanges 20, 21 which extend radially outwardly from the body of the rim 12 and enable mounting of a vehicle tyre (not shown). While not illustrated, the flanges 20, 21 can include a sacrificial section, for example a clip-on or fixable hoop component (not illustrated) that can be connected over the wheels front outer edge to prevent damage to the flange 20, 21 while in operation.

The disc portion 14 includes a central wheel hub section 22 and a radially extending spoke section 24. The shape and configuration of each of the spoke section 24 and hub section 22 of the disc portion 14 can vary significantly and are defined by the shape and configuration of a mold used to form the vehicle wheel 10. The mold can be used to form the disc portion 14 in a variety of configurations to provide a variety of custom finishes to the wheels of a motor vehicle.

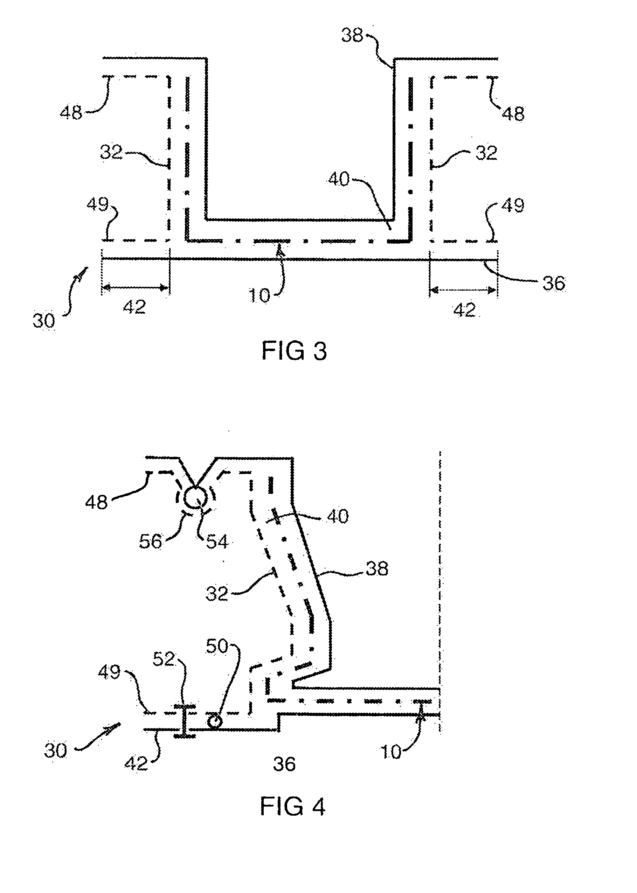

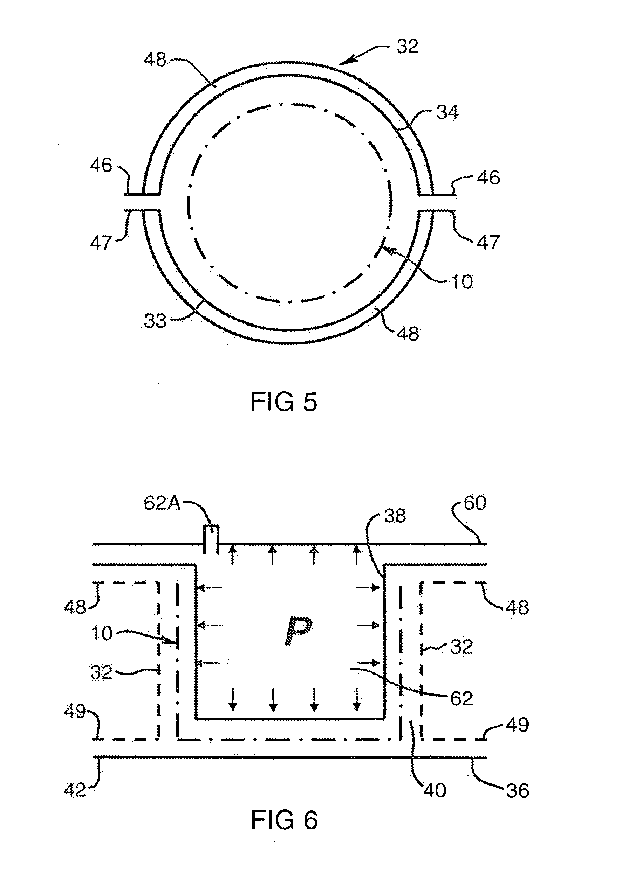

Referring now to Figure 3, there is shown a four component piece mold assembly 30 for forming a motor vehicle wheel 10 such as is shown in Figures 1 and 2. The mold assembly 30 includes an outer rim mold portion 32 which is formed in two half sections 33 and 34 (best seen in Figure 5), an outer disc mold portion 36 and an inner flexible silicone flexible mold element 38. The mold portions 32, 36, 38 are assembled to enclose a mold cavity 40 that defines the shape and configuration of a vehicle wheel 10. The assembled mold assembly 30 is also fluid tight, thereby enabling the mold cavity 40 to be evacuated by a vacuum pump.

The disc mold portion 36 is a plate formed of metal or another material having an inner surface machined or otherwise formed with an imprint of the desired shape and configuration of the front face of the disc portion 14 of the vehicle wheel 10. Thus, the disc mold portion 36 creates the features of the disc portion 14 of the vehicle wheel 10. The disc mold portion 36 also includes a flat flange section 42 that extends about 75mm in a radial direction past the outer edge of the mold cavity 40. This flange section 42 is used to fasten the disc mold portion 36 to the rim mold portion 32. The flange section 42 may have an annular groove (not shown) for sealing purposes. An o-ring is able to be provided against the flange 49 of mold portion 32.

The rim mold portion 32 is annular, being formed of two connectable sections 33, 34 (again, best shown in Figure 5). Each of the sections 33, 34 include radial flanges 46, 47 at their distal ends that include fastening holes by which sections 33, 34 are bolted together using the radial flanges 46, 47 prior to introducing resin into the mold cavity 40. A gasket can be provided between adjacent flanges 46, 47. Each of the sections 33, 34 also include flanges 48 and 49 at opposite axial ends. The flanges 48 and 49 are used to fasten the rim mold portion 32 to the disc mold portion 36 and to the flexible mold element 38 respectively. Each of the flanges 48 and 49 may have grooves (not shown) for receiving an o-ring (for example o-ring 50 in Figure 4) for sealing purposes. The flexible mold element 38 is a flexible silicone component formed with a shape which is the compliment of the inner sides of the rim portion 12 and disc portion 14 of the vehicle wheel 10. As discussed above, it may be formed using a mold dummy which has the desired shape and configuration of the wheel to be molded. The cover 38 may have a thickness of about 3 to 4 mm.

Referring now to Figure 4, there is shown a more detailed sectional view of the mold assembly 30. This view shows the location and fastening system between the flexible mold element 38 and rim mold portion 32. In this respect, the flexible mold element 38 has an annular flange 51 which extends over flanges 48. The flange 51 defines a substantially annular rib 54 which can be flexibly captured in a complementary groove 56 in each of the flanges 48. This "keyhole" type fastening rib and groove system allows the flexible mold element 38 to be releasably secured to the rim mold portion 32. The rib 54 when pressed into the grooves 56 of the rim mold portion 32 provides an airtight seal between the flexible mold element 38 and rim mold portion 32 without the use of additional fasteners.

Figure 6 shows the mold assembly 30 with a pressure plate 60 fastened and sealed over the flexible mold element 38. The illustrated pressure plate 60 is a flat circular metal plate which is fastened to the mold assembly 30 using a clamp ring or the like (not illustrated) to create a fluid seal between the silicone flexible mold element 38 and pressure plate 60. The pressure plate 60 includes an inlet port 62A through which a pressurised fluid, such as nitrogen, can be pumped to pressurise the internal cavity 64 sealed between the flexible mold element 38 and pressure plate 60 to a pressure of up to three atmospheres or 45 psi. The application of pressure aims to reduce the size of air bubbles trapped within the laminate.

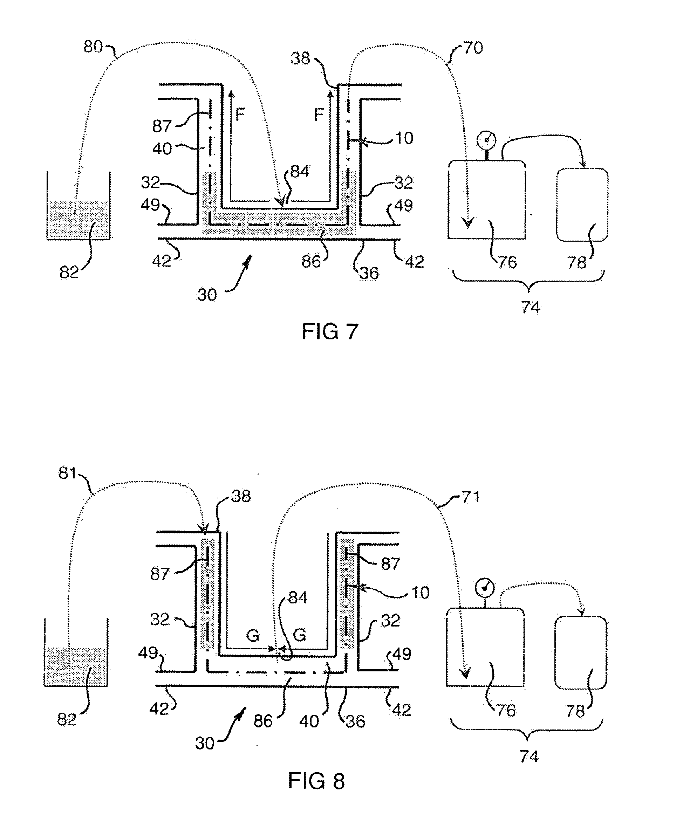

Figure 7 shows a schematic diagram of an arrangement for producing a composite wheel according to the present invention. The mold assembly 30 is shown assembled and ready for producing a wheel. A first and second part of reinforcement fabric (not shown, but generally aligned with the relevant portions of the wheel as represented by broken line 40 in Figures 3 to 6) is inserted around the rim mold portion 32 and placed over the disc mold portion 36 respectively. The first and second parts of reinforcement fabric can be formed from any suitable fibre including (but not limited to) carbon fibre, braided graphite fibres, carbon nano tubes (CNT), Kevlar, fibreglass, natural fibres or the like. The fabric can be weaved and/or layered as will be described in more detail later in the specification.

Vacuum lines 70 (in Figure 7) and/or 71 (in Figure 8) are then attached to the mold assembly 30 to connect a vacuum infusion system 74 to the mold cavity 40. The illustrated vacuum infusion system 74 includes a vacuum chamber 76 and a vacuum pump 78. Resin feed lines 80 (in Figure 7), 81 (in Figure 8) are attached to the completed mold assembly 30 to connect a resin reservoir 82 to the mold cavity 40. A volume of resin is usually required at an inlet port (for example 84) to efficiently fill the mold cavity 40 with resin. In some embodiments, a resin reservoir (not illustrated) can be located within the wheel's hub 22 for this purpose.

Optionally, a pressure plate 60 (see Figure 6) can then be attached over the flexible mold element 38.

Pressure in the mold cavity is reduced from 40 to -100kPa using the vacuum infusion system 74 to evacuate air from the mold cavity 40. The mold assembly 30 and resin are also preheated to 35°C. As discussed above, heating can be achieved through a heating system such as heating elements or a heated water jacket.

Once the mold assembly 30 and resin are at 35°C, a liquid resin can be drawn into the mold cavity 40 to fill the mold cavity 40 and encapsulate the reinforcement fabric. The resin can be any type of resin, for example, polyester, vinyl ester or epoxy. Two configurations can be used to draw resin into the mold cavity 40. Firstly, Figure 7 shows the connections and direction of resin flow (arrow F) when drawing resin into the mold cavity 40 from the hub region 86 to the rim region 87 of the mold cavity 40. Alternatively, Figure 8 shows the connections and direction of resin flow (arrow G) drawing resin into the mold cavity 40 from the rim region 87 to the hub region 86 of the mold cavity 40.

If required, a pump is used to pressurise the pressure chamber 62 to 45psi.

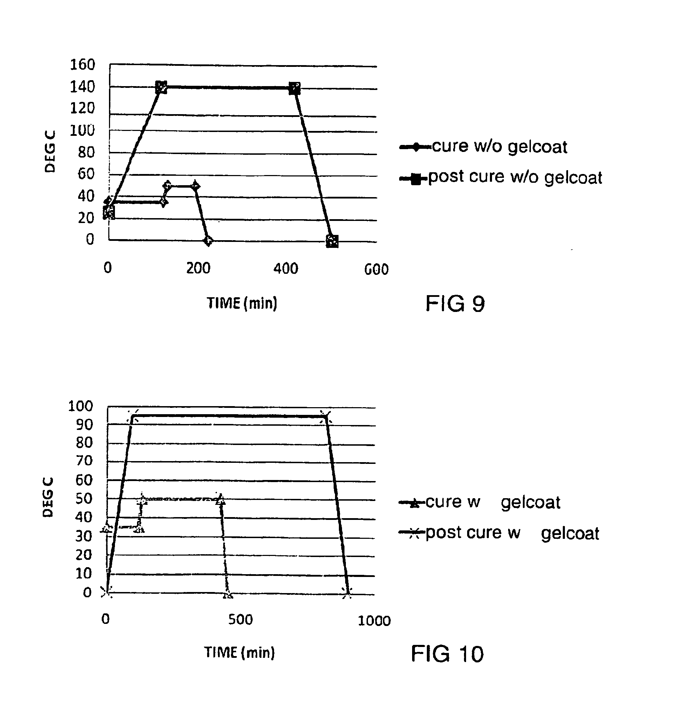

Thereafter, the mold assembly 30 is heated to 50°C for 1 hour to cure the resin. Once the wheel has reached an initial cured state, that is when the wheel is hard enough to be removed from the mold assembly 40 without affecting the wheel's dimensional stability, the mold assembly is disassembled and the formed wheel is removed. The wheel can then undergo a post-cure stage where the wheel is heated in a freestanding position in a conventional curing oven in which the curing temperature is slowly raised to the desired curing temperature. Figures 9 and 10 show two temperature regimes for initial curing and post-curing a wheel formed by the above described forming process. Figure 9 provides an example for a wheel that does not include gel coat. Figure 10 provides an example where the temperature of the wheel cannot be elevated above the recommended service temperature of gel coat included in the wheel.

Once the wheel is fully cured, stud holes and air filler holes can be drilled into the wheel and the hub face of the wheel can be machined.

The wheel may also include a center cap (not illustrated) to enhance styling and cover wheel nuts and attachment hardware. The center cap may be made out of carbon fibre, or other suitable material and be molded using the same process as is used to form the wheel. The center cap may be attached with additional fasteners or through an interference fit between the cap geometry and the rim and or rim attachment hardware such as wheel nuts, wheel studs or attachment washer.

A number of layers of reinforcement fabric are used in the wheel 10 arranged in a stacking sequence which optimises the strength properties of that portion of the vehicle wheel 10. The fabric between each layer is held in place using a tacking spray adhesive. The following stacking sequences are examples of layer stacking orientations of the various layers of reinforcement fabric in the vehicle wheel 10. The orientations are made with reference to the angles are depicted on each of the rim portion 12 and the disc portion 14 of the vehicle wheel 10 shown in Figures 1 and 2. These angles indicate the desired directions in which reinforcing fibre should be orientated within the respective molded composite sections.

***HUB STACKING SEQUENCE:*** The stacking sequence for the hub region 22 of the disc portion 14 of the vehicle wheel 10 is preferably quasi-isotropic. The completed stack of reinforcement fabric is approximately 10mm thick and comprises half a square meter of fabric. The following table provides one example of the stacking arrangement for a fifty ply stack:

**TABLE 1 - Hub stacking sequence**

| **PLY #** | **ORIEN.** | **PLY #** | **ORIEN.** | **PLY #** | **ORIEN.** | **PLY#** | **ORIEN.** | **PLY #** | **ORIEN.** |
|---|---|---|---|---|---|---|---|---|---|
| **1** | Woven | **11** | +/- 45 | **21** | +/- 45 | **31** | 0/90 | **41** | 0/90 |
| **2** | 0/90 | **12** | 0/90 | **22** | 0/90 | **32** | +/- 45 | **42** | +/- 45 |
| **3** | +/- 45 | **13** | +/- 45 | **23** | +/- 45 | **33** | 0/90 | **43** | 0/90 |
| **4** | 0/90 | **14** | 0/90 | **24** | 10/90 | **34** | +/- 45 | **44** | +/- 45 |
| **5** | +/- 45 | **15** | +/- 45 | **25** | +/- 45 | **35** | 0/90 | **45** | 0/90 |
| **6** | 0/90 | **16** | 0/90 | **26** | +/- 45 | **36** | +/- 45 | **46** | +/- 45 |
| **7** | +/- 45 | **17** | +/- 45 | **27** | 0/90 | **37** | 0/90 | **47** | 0/90 |
| **8** | 0/90 | **18** | 0/90 | **28** | +/- 45 | **38** | +/- 45 | **48** | +/- 45 |
| **9** | +/- 45 | **19** | +/- 45 | **29** | 0/90 | **39** | 0/90 | **49** | 0/90 |
| **10** | 0/90 | **20** | 0/90 | **30** | +/- 45 | **40** | +/- 45 | **50** | Woven |

***SPOKE STACKING SEQUENCE:*** The stacking sequence for the spoke region 24 of the disc portion 14 of the vehicle wheel 10 is preferably a stiff orthotropic stacking sequence with a 0° ply bias of at least 60%. For example: [+/-45, 0, 0, 90, 0, 0, +/-45]. The completed stack of reinforcement fabric is approximately 8 mm thick.

***RIM STACKING SEQUENCE:*** The stacking sequence for the rim region 12 of the vehicle wheel 20 is preferably in the form of a covering ply for the visible areas between each spoke on the wheels centre. The reinforcement can also provide a means of connecting the rim region 12 to the spoke region 24 of the disc portion 14 of the vehicle wheel 10. The following table provides one example of the stacking arrangement for a five ply stack:

**TABLE 2 - Rim region stacking sequence**

| **PLY #** | **ORIENTATION** | **PLY #** | **ORIENTATION** |
|---|---|---|---|
| **1** | Woven | **4** | 0/90 |
| **2** | 0/90 | **5** | Woven |
| **3** | +/-45 | | |

The advantages of the method of the present invention include:
- Low cost equipment and infrastructure associated with the vacuum infusion process compared to traditional compression molding techniques; The process is highly repeatable, reliable and can be used with unskilled labour;
- The use of a flexible mold element allows molds to be quickly developed to cater for changing wheel sizes at a lower cost compared to traditional compression molding techniques;
- The use of a flexible mold element more easily mold undercut areas and cavities that conventional rigid molds are unable to be physically be inserted or released;
- The use of a flexible mold element provides a cost reduction in tooling as a flexible polymer mold is cheaper to manufacture and allows for the other tooling components to be manufactured to a lower tolerance. In this respect, matched solid molds must be machined to a high tolerance to obtain correct fitment with the adjoining mold components; and
- The use of dry reinforcement fabrics allow for long term storage of reinforcement fabric stock.

Those skilled in the art will appreciate that the invention described herein is susceptible to variations and modifications other than those specifically described.

Throughout the description and claims of the specification the word "comprise" and variations of the word, such as "comprising" and "comprises", is not intended to exclude other additives, components, integers or steps.

## Claims

1. A method of molding a fibre-reinforced composite wheel (10), the method comprising the steps of:
locating reinforcement fabric within the mold assembly (30);
sealing the mold assembly (30)
introducing a resin into the mold cavity (40) by withdrawing air from the mold cavity (40) through an inlet at a convenient location on the mold assembly; and
curing the resin,
**characterised in that**
the mold assembly (30) includes an annular rim mold portion (32) for defining an outer surface of a rim (12) of the wheel (10) and a disc mold portion (36) for defining a front surface of a disc portion (14) of the wheel (10);
and that
the step of locating reinforcement fabric in the mold assembly comprises:
locating at a first part of reinforcement fabric within the mold assembly (30) around the rim mold portion (32);
locating at a second part of reinforcement fabric within the mold assembly (30) over the disc mold portion (36);
and that
the mold assembly is sealed with a flexible mold element (38) to form a substantially fluid tight mold cavity (40), the flexible mold element (38) including a flexible polymer component for defining an inner surface of the rim (12) of the wheel (10) and a rear surface of the disc portion of the wheel (14);
and that
the method forms an integral fibre-reinforced composite wheel (10).

2. A method according to claim 1, wherein the flexible mold element (38) includes a substantially solid section and a flexible section.

3. A method according to claim 2, wherein the flexible section comprises a silicone polymer.

4. A method according to any preceding claim, wherein the flexible mold element (38) is formed by:
placing a mold dummy of the vehicle wheel (10) within the mold assembly (30);
coating those sections of the mold dummy which are not adjacent the rim mold portion (32) or disc mold portion (36) with a curable polymer material; and
curing the curable polymer material to form a flexible polymer component (38) having a complementary shape and configuration to the abutting sections of the mold dummy.

5. A method according claim 4, further including the steps between the coating step and curing step of:
locating at least one section of reinforcing fabric over at least a portion of the initial coating of flexible polymer material (38); and
coating those sections of the mold dummy which are not adjacent the rim mold portion (32) or disc mold portion (36) with a further layer of flexible polymer material.

6. A method according to any preceding claim, wherein the flexible mold element (38) includes at least one substantially annular rib (54) which produces an interference fit with a complementary annular groove (54) of the rim mold portion (32).

7. A method according to any preceding claim, further including the steps of:
securing a pressure plate (60) over the rear of the rim mold portion (32) to form a substantially fluid tight pressure chamber (64) between the pressure plate (60) and flexible mold element (38);
pressurising the pressure chamber (64) during the curing step.

8. A method according to any preceding claim, further including the step of:
preheating the mold assembly (30) and the resin to a temperature between 20°C to 60°C.

9. A method according to any preceding claim, wherein at least one portion of the mold assembly (30) is heated by a heating system which includes at least one of heating elements or a heating jacket.

10. A method according to any preceding claim, wherein the mold assembly (30) further includes a resin reservoir (82) located at or proximate a hub section (22) of the vehicle wheel (10) from which resin can be drawn into the mold cavity (40).

11. A method according to any preceding claim, wherein at least one of the first part or second part of reinforcement fabric includes at least two layers.

12. A method according to claim 11, wherein the layers are formed as a laminate, each layer being affixed to an adjoining layer using an adhesive.

13. A method according to any preceding claim, wherein the curing step is conducted in two stages, comprising:
a first stage in which curing is conducted at an average temperature of between 40°C and 60°C; and
a second stage in which curing is conducted at an average temperature of between 90°C and 150°C.

14. A method according to any preceding claim, wherein identification features are imbedded in the resin of the wheel (10) while molding the wheel (10).

15. A fibre-reinforced composite wheel (10) formed by a method according to any preceding claim.

## Patentansprüche

1. Verfahren zum Formen eines faserverstärkten Verbundstoffrades (10), wobei das Verfahren die Schritte umfasst:
Anordnen von Verstärkungsgewebe in der Formbaugruppe (30);
Abdichten der Formbaugruppe (30);
Einführen eines Harzes in den Formhohlraum (40) durch Abziehen von Luft aus dem Formhohlraum (40) durch einen Einlass an einer geeigneten Stelle an der Formbaugruppe; und
Härten des Harzes,
**dadurch gekennzeichnet, dass**
die Formbaugruppe (30) einen Ringfelgen-Formabschnitt (32) zum Definieren einer Außenfläche einer Felge (12) des Rades (10) und einen Scheibenformabschnitt (36) zum Definieren einer Vorderfläche eines Scheibenabschnitts (14) des Rades (10) aufweist;
und dass
der Schritt zum Anordnen von Verstärkungsgewebe in der Formbaugruppe umfasst:
Anordnen von Verstärkungsgewebe an einem ersten Teil in der Formbaugruppe (30) um den Felgenformabschnitt (32);
Anordnen von Verstärkungsgewebe an einem zweiten Teil in der Formbaugruppe (30) über dem Scheibenformabschnitt (36);
und dass
die Formbaugruppe mit einem flexiblen Formelement (38) abgedichtet wird, um einen im Wesentlichen fluiddichten Formhohlraum (40) zu bilden, wobei das flexible Formelement (38) eine flexible Polymerkomponente zum Definieren einer Innenfläche der Felge (12) des Rades (10) und einer Rückfläche des Scheibenabschnittes des Rades (14) aufweist;
und dass
das Verfahren ein integrales faserverstärktes Verbundstoffrad (10) bildet.

2. Verfahren nach Anspruch 1,
wobei das flexible Formelement (38) ein im Wesentlichen massives Teil und ein flexibles Teil aufweist.

3. Verfahren nach Anspruch 2,
wobei das flexible Teil ein Silikonpolymer umfasst.

4. Verfahren nach einem der vorhergehenden Ansprüche,
wobei das flexible Formelement (38) geformt wird durch:
Anordnen eines Formmusters des Fahrzeugrades (10) in der Formbaugruppe (30);
Beschichten derjenigen Teile des Formmusters, die sich nicht benachbart dem Felgenformabschnitt (32) oder dem Scheibenformabschnitt (36) befinden, mit einem aushärtbaren Polymermaterial; und
Aushärten des aushärtbaren Polymermaterials, um eine flexible Polymerkomponente (38) mit einer zu den angrenzenden Teilen des Formmusters komplementären Form und Konfiguration zu bilden.

5. Verfahren nach Anspruch 4,
ferner mit den Schritten zwischen dem Beschichtungsschicht und dem Härtungsschritt zum:
Anordnen von zumindest einem Teil des Verstärkungsgewebes über zumindest einem Abschnitt der Anfangsbeschichtung aus flexiblem Polymermaterial (38); und
Beschichten derjenigen Teile des Formmusters, die sich nicht benachbart des Felgenformabschnittes (32) oder des Scheibenformabschnittes (36) befinden, mit einer weiteren Schicht aus flexiblem Polymermaterial.

6. Verfahren nach einem der vorhergehenden Ansprüche,
wobei das flexible Formelement (38) zumindest eine im Wesentlichen ringförmige Rippe (54) aufweist, die eine Presspassung mit einer komplementären Ringnut (54) des Felgenformabschnitts (32) erzeugt.

7. Verfahren nach einem der vorhergehenden Ansprüche, ferner mit den Schritten:
Sichern einer Druckplatte (60) über der Rückseite des Felgenformabschnittes (32), um eine im Wesentlichen fluiddichte Druckkammer (64) zwischen der Druckplatte (60) und dem flexiblem Formelement (38) zu bilden;
Druckbeaufschlagen der Druckkammer (64) während des Härtungsschrittes.

8. Verfahren nach einem der vorhergehenden Ansprüche, ferner mit dem Schritt zum:
Vorheizen der Formbaugruppe (30) und des Harzes auf eine Temperatur zwischen 20°C und 60°C.

9. Verfahren nach einem der vorhergehenden Ansprüche,
wobei zumindest ein Abschnitt der Formbaugruppe (30) durch ein Heizsystem erhitzt wird, das zumindest eines von Heizelementen oder einem Heizmantel aufweist.

10. Verfahren nach einem der vorhergehenden Ansprüche,
wobei die Formbaugruppe (30) ferner ein Harzreservoir (82) aufweist, das an oder nahe einem Nabenteil (22) des Fahrzeugrades (10) angeordnet ist, von dem Harz in den Formhohlraum (40) gezogen werden kann.

11. Verfahren nach einem der vorhergehenden Ansprüche,
wobei zumindest eines von dem ersten Anteil oder dem zweiten Anteil des Verstärkungsgewebes zumindest zwei Schichten aufweist.

12. Verfahren nach Anspruch 11,
wobei die Schichten als ein Laminat geformt sind, wobei jede Schicht an einer angrenzenden Schicht unter Verwendung eines Klebstoffes befestigt ist.

13. Verfahren nach einem der vorhergehenden Ansprüche,
wobei der Härtungsschritt in zwei Stufen durchgeführt wird, umfassend:
eine erste Stufe, bei der eine Härtung bei einer durchschnittlichen Temperatur zwischen 40°C und 60°C durchgeführt wird; und
eine zweite Stufe, bei der eine Härtung bei einer durchschnittlichen Temperatur zwischen 90°C und 150°C durchgeführt wird.

14. Verfahren nach einem der vorhergehenden Ansprüche,
wobei Identifizierungsmerkmale in das Harz des Rades (10) eingebettet werden, während das Rad (10) geformt wird.

15. Faserverstärktes Verbundstoffrad (10), das durch ein Verfahren nach einem der vorhergehenden Ansprüche geformt ist.

## Revendications

1. Procédé de moulage d'une roue composite renforcée par des fibres (10), le procédé comprenant les étapes consistant à :
placer un tissu de renforcement à l'intérieur de l'ensemble de moule (30) ;
fermer l'ensemble de moule (30) de manière étanche ;
introduire une résine dans la cavité du moule (40) en extrayant l'air hors de la cavité du moule (40) via une entrée à un emplacement convenable sur l'ensemble de moule ; et
laisser prendre la résine,
**caractérisé en ce que**
l'ensemble de moule (30) inclut une portion de moulage de jante annulaire (32) pour définir une surface extérieure d'une jante (12) de la roue (10) et une portion de moulage de disque (36) pour définir une surface frontale d'une portion en disque (14) de la roue (10) ;
et **en ce que**
l'étape consistant à placer un tissu de renforcement dans l'ensemble de moule comprend :
de placer à une première partie du tissu de renforcement à l'intérieur de l'ensemble de moule (30) autour de la portion de moulage de jante (32);
de placer à une seconde partie du tissu de renforcement à l'intérieur de l'ensemble de moule (30) par-dessus la portion de moulage de disque (36) ;
et **en ce que**
l'ensemble de moule est fermé de manière étanche avec un élément de moule flexible (38) pour former une cavité de moule sensiblement étanche aux fluides (40), l'élément de moule flexible (38) incluant un composant en polymère flexible pour définir une surface intérieure de la jante (12) de la roue (10) et une surface arrière de la portion en disque de la roue (14) ;
et **en ce que**
le procédé met en forme une roue composite intégrale renforcée par des fibres (10).

2. Procédé selon la revendication 1, dans lequel l'élément de moule flexible (38) inclut une section sensiblement pleine et une section flexible.

3. Procédé selon la revendication 2, dans lequel la section flexible comprend un polymère au silicone.

4. Procédé selon l'une quelconque des revendications précédentes, dans lequel l'élément de moule flexible (38) est formé :
en plaçant une maquette de moulage de la roue de véhicule (10) à l'intérieur de l'ensemble de moule (30) ;
revêtir celle des sections de la maquette de moulage qui ne sont pas adjacentes à la portion de moulage de jante (32) ou la portion de moulage de disque (36) avec un matériau polymère capable de durcir ; et
faire durcir le matériau polymère capable de durcir et former un composant polymère flexible (38) ayant une former une configuration complémentaire aux sections en aboutement de la maquette de moulage.

5. Procédé selon la revendication 4, incluant en outre les étapes, entre l'étape de revêtement et l'étape de durcissement, consistant à :
placer au moins une section de tissu de renforcement par-dessus au moins une portion du revêtement initial du matériau polymère flexible (38) ; et
revêtir celles des sections de la maquette de moulage qui ne sont pas adjacentes à la portion de moulage de jante (32) ou la portion de moulage de disque (36) avec une autre couche de matériau polymère flexible.

6. Procédé selon l'une quelconque des revendications précédentes, dans lequel l'élément de moule flexible (38) inclut au moins une nervure sensiblement annulaire (54) qui produit un assemblage à interférence avec une rainure annulaire complémentaire (54) de la portion de moulage de jante (32).

7. Procédé selon l'une quelconque des revendications précédentes, incluant en outre les étapes consistant à :
fixer une plaque de pressage (60) sur l'arrière de la portion de moulage de jante (32) pour former une chambre à pression sensiblement étanche aux fluides (64) entre la plaque de pressage (60) et l'élément de moule flexible (38) ;
mettre sous pression la chambre à pression (64) pendant l'étape de durcissement.

8. Procédé selon l'une quelconque des revendications précédentes, incluant en outre l'étape consistant à :
préchauffer l'ensemble de moule (30) et la résine à une température entre 20° C et 60° C.

9. Procédé selon l'une quelconque des revendications précédentes, dans lequel au moins une portion de l'ensemble de moule (30) est chauffée par un système de chauffage qui inclut au moins un système parmi des éléments chauffants et une chemise chauffante.

10. Procédé selon l'une quelconque des revendications précédentes, dans lequel l'ensemble de moule (30) inclut en outre un réservoir à résine (82) situé au niveau de ou à proximité d'une section de moyeu (22) de la roue de véhicule (10), depuis lequel de la résine peut être aspirée jusque dans la cavité du moule (40).

11. Procédé selon l'une quelconque des revendications précédentes, dans lequel une partie au moins parmi la première partie et la seconde partie du tissu de renforcement inclut au moins deux couches.

12. Procédé selon la revendication 11, dans lequel les couches sont formées comme un stratifié, chaque couche étant fixée à une couche adjacente en utilisant un adhésif.

13. Procédé selon l'une quelconque des revendications précédentes, dans lequel l'étape de durcissement est menée en deux stades, comprenant :
un premier stade dans lequel le durcissement est mené à une température moyenne entre 40° C et 60° C ; et
un second stade dans lequel le durcissement est mené à une température moyenne entre 90° C et 150° C.

14. Procédé selon l'une quelconque des revendications précédentes, dans lequel des caractéristiques d'identification sont noyées dans la résine de la roue (10) pendant que l'on moule la roue (10).

15. Roue composite renforcée par des fibres (10) formée par un procédé selon l'une quelconque des revendications précédentes.
